# EUROPÄISCHE PATENTSCHRIFT

(11) **EP 0 350 624 B1**
(45) Veröffentlichungstag und Bekanntmachung des Hinweises auf die Patenterteilung: **12.01.1994**
(21) Anmeldenummer: 89110518.1
(22) Anmeldetag: 10.06.1989
(51) Int. Cl.: H02M 3/335

(54) **Regelkreis zur Stabilisierung der Ausgangsspannung eines Speisegerätes**
Control circuit for stabilizing the output voltage of a power supply
Circuit de régulation pour stabiliser la tension de sortie d'un dispositif d'alimentation

(30) Priorität: 12.07.1988 DE 3823583
(43) Veröffentlichungstag der Anmeldung: 17.01.1990
(73) Patentinhaber: ASEA BROWN BOVERI AG, 5400 Baden (CH)
(72) Erfinder: Hänsli, Markus, CH-4658 Däniken (CH); Schilling, Robert, CH-5443 Niederrohrdorf (CH)

(56) Entgegenhaltungen:
- DE-A- 3 829 627
- GB-A- 2 128 824
- US-A- 3 742 371

## Beschreibung

### TECHNISCHES GEBIET

Bei der Erfindung wird ausgegangen von einem Speisegerät nach dem einleitenden Teil von Patentanspruch 1.

### STAND DER TECHNIK

Hierbei nimmt die Erfindung auf einem Stand der Technik von Speisegeräten Bezug, wie er etwa in der BBC Brown Boveri Firmenschrift Datentechnik Modulfamilie ED 1000 Speisung ED 1867 (Druckschriften-Best.-Nr. HEDT 92130 HWD, 8304) beschrieben ist. Das bekannte Speisegerät kann an Wechsel- oder Gleichspannung angeschlossen werden und weist eine galvanische Trennung auf. Die am Eingang des Speisegerätes anstehende Eingangsspannung wird mittels eines von einem pulsbreitenmodulierten Signal angesteuerten Schalttransistors in eine Wechselspannung von typischerweise 25 kHz zerhackt. Am galvanisch vom Eingang getrennten Ausgang des Speisegerätes steht eine Ausgangsspannung an, welche erzeugt wird, indem die von einem Leistungstransformator übertragene zerhackte Wechselspannung an dessen Sekundärseite gleichgerichtet und geglättet wird. Die Ausgangsspannung wird hierbei durch Verändern der Schaltdauer des Schalttransistors stabilisiert. Hierzu ist es erforderlich, dass ein von der Grösse der Ausgangsspannung abhängiges Signal, welches zur Bildung des pulsbreitenmodulierten Signals mit einer sägezahnförmigen Spannung verglichen wird, galvanisch vom Ausgang des Speisegerätes getrennt an den Schalttransistor geführt wird. Dies bedingt einen im Führungsweg dieses Signals angeordneten Optokoppler. Da Optokoppler eine vergleichsweise hohe Exemplarstreuung aufweisen, muss der verwendete Optokoppler besonders abgeglichen werden. Ferner weisen Optokoppler ein gegenüber den anderen Komponenten des Speisegerätes ungünstiges Alterungsverhalten auf. Zudem benötigen solche mit Optokopplern ausgerüstete Speisegeräte spezielle Anlaufschaltungen auf der Eingangsseite, welche blockiert werden müssen, sobald der Regelkreis arbeitet, und welche die Funktion des Regelkreises übernehmen müssen, wenn der Ausgang des Speisegerätes kurzgeschlossen ist.

Aus US-A-3742371 ist ein Netzgerät bekannt, bei dem die von einer Wechselstromquelle gelieferte Eingangsspannung mittels eines getaktet angesteuerten Schalttransistors in eine Wechselspannung zerhackt wird. Bei jedem Takt des Schalttransistors wird eine konstante Menge Energie auf die Sekundärseite eines Transformators übertragen. Je nach Leistungsverbrauch auf der Sekundärseite werden mehr oder weniger Energiepakete übertragen. Energiemangel auf der Sekundärseite wird mittels eines Spannungsvergleichers festgestellt, welcher unterhalb eines vorgegebenen Wertes der Ausgangsspannung des Netzgerätes anspricht und auf einen spannungsgesteuerten Oszillator wirkt. Die Ausgangssignale dieses Oszillators bewirken über einen als galvanische Trennstelle fungierenden Pulstransformator, einen triggerbaren Oszillator und einen Steuerkreis das Schliessen des Schalttransistors. Der nun auf der Eingangsseite des Netzgerätes fliessende Strom wird oberhalb eines Grenzwertes unterbrochen. Zu diesem Zweck benötigt das Netzgerät einen Stromdetektor, welcher auf den Steuerkreis wirkt und diesen veranlasst, oberhalb des Stromgrenzwertes den Schalttransistor zu öffnen.

### KURZE DARSTELLUNG DER ERFINDUNG

Die Erfindung, wie sie in Patentanspruch 1 angegeben ist, löst die Aufgabe, ein Speisegerät mit einem Regelkreis zur Stabilisierung der Ausgangsspannung anzugeben, welches sich bei einfachem Aufbau auch nach langjährigem, wartungsfreiem Betrieb durch eine grosse Regelgenauigkeit auszeichnet.

Das erfindungsgemässe Speisegerätlässt sich aus handelsüblichen, das gleiche Temperatur- und Alterungsverhalten wie die übrigen Komponenten des Speisegerätes aufweisenden Teilen herstellen. Ein erfindungsgemäss ausgeführtes Speisegerät kann preiswert hergestellt werden und weist auch nach langjährigem wartungsfreiem Betrieb eine hohe Regelgenauigkeit auf. Aufwendige Kompensations- und Anlaufschaltungen können zudem entfallen.

### KURZE BESCHREIBUNG DER ERFINDUNG

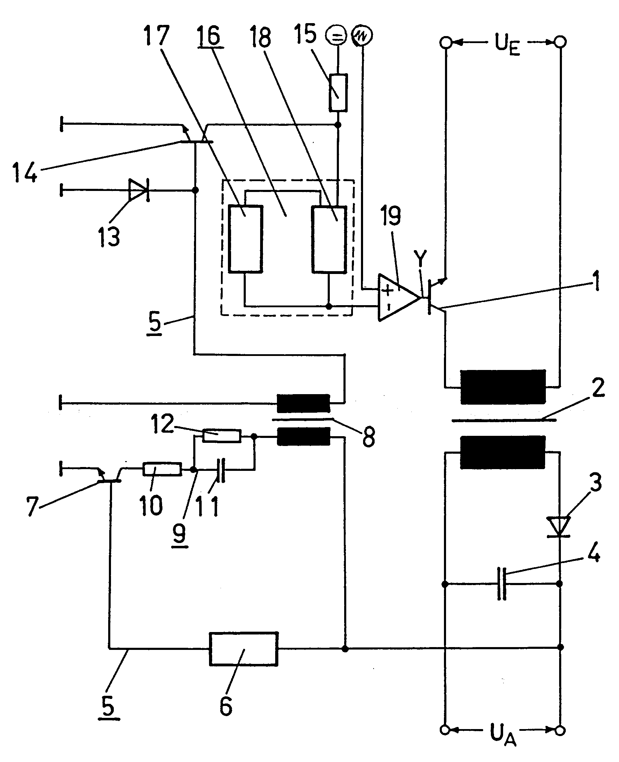

Nachfolgend wird die Erfindung anhand eines in der Zeichnung dargestellten Ausführungsbeispiels näher erläutert.

Hierbei zeigt die einzige Figur ein Blockschaltbild eines Speisegerätes mit einem zur Stabilisierung seiner Ausgangsspannung vorgesehenen Regelkreis nach der Erfindung.

### WEG ZUR AUSFÜHRUNG DER ERFINDUNG

In der Figur ist an den Eingang eines Speisegerätes eine aus einem Netz oder einer Batterie entnommene Eingangsspannung U_{E} angelegt. Die Eingangsspannung U_{E} wird in einem als Schalttransistor 1 ausgeführten Schaltelement zu einer Wechselspannung von typischerweise 25 kHz zerhackt. Diese Wechselspannung ist an die Primärseite eines Transformators 2 geführt. Auf der galvanisch von der Primärseite getrennten Sekundärseite wird die übertragene Wechselspannung in einer Dioden- 3 und einer Kondensatorschaltung 4 gleichgerichtet und geglättet. Am galvanisch vom Eingang getrennten Ausgang des Speisegerätes tritt dann eine als Speisespannung für elektronische Geräte verwendbare Gleichspannung U_{A} auf.

Die Ausgangsspannung U_{A} wird durch Verändern der Einschaltdauer des als Regelstrecke verwendeten Schalttransistors 1 im nachfolgend beschriebenen Regelkreis stabilisiert. Hierbei wirkt ein von der Ausgangsspannung U_{A} abhängiges Spannungssignal ber einen Uebertragungsweg 5 auf die Basis des Schalttransistors 1.

Der Uebertragungsweg 5 umfasst einen ein ausgangsspannungsproportionales Messignal aufnehmenden spannungsabhängigen Oszillator 6, dessen Ausgang auf die Basis eines Schalttransistors 7 wirkt. Die Kollektor-Emittor-Strecke des Schalttransistors 7 liegt in Serie zu einem der Primärwicklung eines Pulstransformators 8 vorgeschalteten Differenzierglied 9. Dieses Differenzierglied enthält eine Serienschaltung eines ohmschen Widerstandes 10 und eines Kondensators 11, zu welchem ein Entladerwiderstand 12 parallelgeschaltet ist. Die Primärwicklung des Signaltransformators 8 ist gespeist von einer der Ausgangsspannung U_{A} proportionalen Spannung. Die Sekundärseite des Pulstransformators 8 wirkt auf die Basis eines mittels einer Diode 13 vor Ueberspannungen geschützten Schalttransistors 14. Die Kollektor-Emitter-Strecke des Schalttransistors 14 liegt über einen Widerstand 15 an einer nicht bezeichneten Spannungsquelle. Der Verbindungspunkt von Kollektor-Emitter-Strecke und Widerstand 15 ist an einen Eingang eines in PLL (Phase-Locked-Loop)-Technik ausgeführten Frequenzregelkreises 16 geführt. Dieser Frequenzregelkreis enthält einen spannungsgesteuerten Oszillator 17 sowie ein auf den Eingang dieses Oszillators wirkenden Phasenkomparator 18, dessen einer Eingang mit dem Verbindungspunkt von Kollektor-Emitter-Strecke des Schalttransistors 14 und Widerstand 15 in Verbindung steht und dessen anderer Eingang mit dem Ausgang des Oszillators 17 verbunden ist. Der Ausgang des Frequenzregelkreises 16 ist mit einem Eingang eines als Regler wirkenden Komparators 17 verbunden, dessen anderem Eingang eine dem Sollwert der Ausgangsspannung U_{A} entsprechende Referenzspannung zugeführt ist. Am Ausgang des Komparators 19 steht eine einer Regelabweichung der Ausgangsspannung U_{A} entsprechende Stellgrösse y an, welche der Basis des Schalttransistors 1 zugeführt wird.

Der vorstehend beschriebene Regelkreis wirkt nun wie folgt: Ein der Ausgangsspannung U_{A} proportionales Messignal wird am Ausgang des Speisegerätes abgegriffen und dem Eingang des spannungsabhängigen Oszillators 6 zugeführt. Der Oszillator 6 erzeugt ein Spannungssignal mit einer vom Wert des zugeführten Spannungssignals abhängigen Frequenz. Dieses ausgangsspannungsabhängige Frequenzsignal steuert den Schalttransistor 7 getaktet an. Die in der Kollektor-Emitter-Strecke des Schalttransistors 7 erzeugte zerhackte Wechselspannung wird im Differenzierglied 9 in Nadelimpulse umgewandelt. Daher kann der diese Nadelimpulse übertragende und hierbei eine galvanische Trennung im Uebertragungsweg 5 bewirkende Pulstransformator 8 besonders leistungsschwach bemessen sein.

Die auf die Sekundärseite des Pulstransformators 8 übertragenen Nadelimpulse steuern den als Impulsumformer wirkenden Schalttransistor 14 getaktet an. Am Verbindungspunkt zwischen Kollektor-Emitter-Strecke dieses Schalttransistors und Widerstand 15 steht daher eine mit der Ausgangsfrequenz des Oszillators 6 getaktete zerhackte Wechselspannung an, welche auf den einen Eingang des Phasenkomparators 18 wirkt. Auf den anderen Eingang des Phasenkomparators 18 ist der Ausgang des Oszillators 17 geführt. Der von Phasenkomparator 18 und Oszillator 17 gebildete Frequenzregelkreis 16 weist einen vergleichsweise grossen Fangbereich auf und synchronisiert sich bei der vom Oszillator 6 erzeugten Frequenz. Das am Ausgang des Frequenzregelkreises 16 anstehende Steuersignal des Oszillators 17 ist dann im eingerasteten Zustand des Frequenzregelkreises 16 ein Abbild der Ausgangsspannung U_{A}.

Nach Vergleich dieses Abbildes der Ausgangsspannung mit einer sägezahnförmigen Spannung - wie dies aus dem Stand der Technik nach der BBC Firmenschrift bekannt ist -, wird im Komparator 19 wird ein Stellsignal y gebildet, welches die Einschaltdauer des als Regelstrecke wirkenden Schalttransistors 1 derart bestimmt, dass die Ausgangsspannung U_{A} konstant bleibt.

Soll- und Istwert der Ausgangsspannung können auch schon auf der Ausgangsseite des Speisegerätes miteinander verglichen werden. Anstelle eines der Ausgangsspannung proportionalen Spannungssignals wird dann dem Oszillator 6 ein der Stellgrösse y proportionales Spannungssignal zugeführt, welches über den vorstehend beschriebenen Üebertragungsweg 5 auf den Schalttransistors 1 wirkt.

## Patentansprüche

1. Speisegerät mit einem Regelkreis zur Stabilisierung der Ausgangsspannung des Gerätes,
bei dem die von einem Netz oder einer Batterie gelieferte Eingangsspannung (U_{E}) vor Übertragung zum galvanisch durch einen Leistungstransformator (2) vom Eingang getrennten Ausgang mittels mindestens eines in Reihe mit der Primärseite des Leistungstransformators (2) geschalteten Schaltelementes (1) in eine Wechselspannung zerhackt wird,
bei dem der Regelkreis die Einschaltdauer des mindestens einen Schaltelementes (1) mit einer von der Ausgangsspannung (U_{A}) abhängigen Stellgrösse (y) steuert, und
bei dem ein der Ausgangsspannung (U_{A}) proportionales Signal in einem eine galvanische Trennstelle aufweisenden Übertragungsweg (5) geführt und die Einschaltdauer des mindestens eines Schaltelementes (1) durch Vergleich eines Abbildes des übertragenen Signals der Ausgangsspannung und eines Abbildes des Sollwertes der Ausgangsspannung (U_{A}) bestimmt wird,
dadurch gekennzeichnet, dass der Übertragungsweg (5) folgende Elemente aufweist:
einen von ausgangsspannungsproportionalen Spannungssignalen gesteuerten ersten Oszillator (6) zur Bildung ausgangsspannungsabhängiger Frequenzsignale,
einen Pulstransformator (8) zur Übertragung der auf seinen Eingang wirkenden Frequenzsignale, und
einen vom ersten Oszillator (6) galvanisch getrennten Frequenzregelkreis (16) zur Umsetzung der vom Pulstransformator (8) übertragenen Signale in Signale, welche dem Abbild der Ausgangsspannung (U_{A}) entsprechen,
wobei der Frequenzregelkreis (16) einen zweiten spannungsgesteuerten Oszillator (17) aufweist sowie einen auf den Eingang des zweiten Oszillators (17) wirkenden Phasenkomparator (18), auf dessen einen Eingang die vom Pulstransformator (8) übertragenen Signale wirken, und dessen anderem Eingang der Ausgang des zweiten Oszillators (17) zugeführt ist, und
wobei der Frequenzregelkreis (16) sich bei der vom ersten Oszillator (6) erzeugten Frequenz synchronisiert.

2. Speisegerät nach Anspruch 1, dadurch gekennzeichnet, dass dem Pulstransformator (8) ein Differenzierglied (9) vorgeschaltet ist, welches von den im ersten Oszillator (6) gebildeten Frequenzsignalen getaktet wird, und dass dem Pulstransformator (8) ein von den im Pulstransformator (8) übertragenen Signalen gesteuerter und auf den einen Eingang des Phasenkomparators (18) wirkender Impulsumformer (14) nachgeschaltet ist.

## Claims

1. Supply apparatus having a control loop for stabilizing the output voltage of the apparatus, in the case of which the input voltage (U_{E}) which is supplied from a network or from a battery is chopped into an AC voltage, before transmission to the output, which is DC-isolated from the input by a power transformer (2), by means of at least one switching element (1) which is connected in series with the primary of the power transformer (2), in which the control loop controls the switched-on duration of the at least one switching element (1) by means of a control variable (y) which is dependent on the output voltage (U_{A}), and in which a signal which is proportional to the output voltage (U_{A}) is carried in a transmission path (5) which has a DC-isolation point, and the switched-on duration of the at least one switching element (1) is determined by comparing an image of the transmitted signal of the output voltage and an image of the required value of the output voltage (U_{A}), characterized in that the transmission path (5) has the following elements:
a first oscillator (6), which is controlled by voltage signals which are proportional to the output voltage, in order to form frequency signals which are dependent on the output voltage,
a pulse transformer (8) for transmitting the frequency signals which act on its input, and
a frequency control loop (16), which is DC-isolated from the first oscillator (6), in order to convert the signals which are transmitted by the pulse transformer (8) into signals which correspond to the image of the output voltage (U_{A}),
the frequency control loop (16) having a second voltage-controlled oscillator (17) as well as a phase comparator (18) which acts on the input of the second oscillator (17) and on whose one input the signals which are transmitted by the pulse transformer (8) act, and to whose other input the output of the second oscillator (17) is supplied, and
the frequency control loop (16) is synchronized at the frequency produced by the first oscillator (6).

2. Supply apparatus according to Claim 1, characterized in that a differentiating element (9) is connected upstream of the pulse transformer (8), which differentiating element (9) is pulsed by the frequency signals formed in the first oscillator (6), and in that a pulse shaper (14), which is controlled by the signals transmitted in the pulse transformer (8) and acts on the one input of the phase comparator (18), is connected downstream of the pulse transformer (8).

## Revendications

1. Appareil d'alimentation pourvu d'un circuit de régulation pour stabiliser la tension de sortie de l'appareil, dans lequel la tension d'entrée (U_{E}) fournie par un réseau ou par une batterie est hachée en une tension alternative avant transmission à la sortie isolée galvaniquement de l'entrée par un transformateur de puissance (2) à l'aide d'au moins un élément de commutation (1) connecté en série avec le côté primaire du transformateur de puissance (2), le circuit de régulation commande la durée de connexion dudit au moins un élément de commutation (1) à l'aide d'une grandeur réglante (y) dépendant de la tension de sortie (U_{A}), et un signal proportionnel à la tension de sortie (U_{A}) est acheminé dans une voie de transmission (5) présentant un point d'isolement galvanique et la durée de connexion dudit au moins un élément de commutation (1) est déterminée par comparaison d'une représentation du signal transmis de la tension de sortie et d'une représentation de la valeur de consigne de la tension de sortie (U_{A}), caractérisé en ce que la voie de transmission (5) comporte les éléments suivants :
un premier oscillateur (6) commandé par des signaux de tension proportionnels à la tension de sortie pour former des signaux de fréquence dépendant de la tension de sortie,
un transformateur d'impulsions (8) pour transmettre les signaux de fréquence opérant à son entrée, et
un circuit de régulation de fréquence (16) isolé galvaniquement du premier oscillateur (6) pour convertir les signaux transmis par le transformateur d'impulsions (8) en signaux qui correspondent à la représentation de la tension de sortie (U_{A}),
le circuit de régulation de fréquence (16) comportant un deuxième oscillateur (17) commandé par la tension ainsi qu'un comparateur de phase (18) agissant sur l'entrée du deuxième oscillateur (17), sur une entrée duquel agissent les signaux transmis par le transformateur d'impulsions (8) et à l'autre entrée duquel est acheminée la sortie du deuxième oscillateur (17), et le circuit de régulation de fréquence (16) se synchronisant avec la fréquence produite par le premier oscillateur (6).

2. Appareil d'alimentation selon la revendication 1, caractérisé en ce qu'en amont du transformateur d'impulsions (8) est connecté un élément différentiel (9), qui est synchronisé par les signaux de fréquence formés dans le premier oscillateur (6), et en ce qu'en aval du transformateur d'impulsions (8), est connecté un convertisseur d'impulsions (14) commandé par les signaux transmis dans le transformateur d'impulsions (8) et opérant sur ladite une entrée du comparateur de phase (18).
